# EUROPÄISCHE PATENTSCHRIFT

(11) **EP 0 569 719 B1**
(45) Veröffentlichungstag und Bekanntmachung des Hinweises auf die Patenterteilung: **18.06.1997**
(21) Anmeldenummer: 93106010.7
(22) Anmeldetag: 14.04.1993
(51) Int. Cl.: B21C 47/24, B60V 3/04

(54) **Bundtransportsystem**
Band transport system
Système de transport de bande

(30) Priorität: 11.05.1992 DE 4215430
(43) Veröffentlichungstag der Anmeldung: 18.11.1993
(73) Patentinhaber: SMS SCHLOEMANN-SIEMAG AKTIENGESELLSCHAFT, 40237 Düsseldorf (DE)
(72) Erfinder: Richert, Withold, W-5142 Hückelhoven 2 (DE); Pfannschmidt, Martin, W-5620 Heiligenhaus (DE); Aelter, Johan, B-3680 Maaseik/Belgien (DE)
(74) Vertreter: Valentin, Ekkehard, Dipl.-Ing.

(56) Entgegenhaltungen:
- DE-A- 3 538 276
- GB-A- 1 354 888
- US-A- 3 451 351
- US-A- 3 643 600
- US-A- 3 861 321

## Beschreibung

Die Erfindung betrifft ein Bundtransportsystem mit Luftkissenfahrzeugen für Geradeaus- und Kurvenfahrt, wobei das Luftkissenfahrzeug an seinen Längsseiten mechanische, wechselweise rechts- oder linksseitig betätigbare Seitenführungen aufweist, denen Leitführungen zugordnet sind, insbesondere zur Beschickung von Haspeln vor- und hinter Bandanlagen und Walzgerüsten.

Ein in einem System zum Transport von Bunden eingesetztes Luftkissenfahrzeug dieser Art ist durch die DE-A-35 38 276 bekanntgeworden. Diese Fahrzeug weist allerdings keine mechanischen, wechselweise rechts- oder linksseitig betätigbaren Seitenführungen mit diesen zugeordneten Leitführungen auf. Solche Ausgestaltungen sind an Luftkissenfahrzeugen aber grundsätzlich aus der US-A-3 861 321 und US-A-3 643 600 bekannt. Die mit diesen Seitenführungen ausgerüsteten Luftkissenfahrzeuge sind aber ausschließlich dazu geeignet, durch den Eingriff der Seitenführungen mit den im bzw. auf dem Hüttenflur angeordneten Leitführungen die Geradeaus- bzw. Kurvenfahrt des Luftkissenfahrzeuges zu gewährleisten. Damit ist allerdings die Beweglichkeit der Luftkissenfahrzeuge und damit deren Einsatzmöglichkeit in einem Bundtransportsystem eingeschränkt.

Der Erfindung liegt die Aufgabe zugrunde, ein Bundtransportsystem mit Luftkissenfahrzeugen der eingangs genannten Art zu schaffen, das sich variabler einsetzen läßt, insbesondere die Übernahme bzw. Abgabe von Walzbandbunden auf einfache Weise ermöglicht.

Diese Aufgabe wird erfindungsgemäß dadurch gelöst, daß jede Seitenführung vertikal heb- und senkbare Stützrollen aufweist und zum Querverfahren des Luftkissenfahrzeuges die Seitenführungen horizontal ein- und ausführbar sind. Die erfindungsgemäßen Seitenführungen lassen sich somit zum Verfahren des Luftkissenfahrzeuges quer zur normalen Fahrtrichtung ausnutzen und ein transportiertes Bund in bzw. auf eine Bundablage fahren. Während des Querverfahrens stützen sich die Rollen der gerade beaufschlagten Seitenführung in der im Fundament verankerten U-Schiene ab. Die Seitenführungen ermöglichen somit eine bewegliche Fahrzeugführung, da sich das Fahrzeug nämlich nach rechts oder nach links querverfahren läßt.

Wenn sich mit den Längsbalken der Seitenführungen verbundene Führungsstangen und Verstellspindeln in das Fahrzeuginnere erstrecken und die Verstellspindeln in Gewindeaufnahmen angeordnet sind, brauchen lediglich die Verstellspindeln mehr oder weniger weit in die Gewindeaufnahmen eingeschraubt zu werden, um das Luftkissenfahrzeug quer zu verfahren; die im Abstand voneinander angeordneten Führungsstangen sorgen dabei für ein verkantungsfreies Querverfahren. Die Verstellspindeln jeder Seitenführung lassen sich über eine gemeinsame Antriebswelle an einen Antriebsmotor anschließen, so daß sich für das Querverfahren des Luftkissenfahrzeugs ein elektrischer Spindelantrieb verwirklichen läßt.

Nach einem Vorschlag der Erfindung ist das Luftkissenfahrzeug außerdem mit vier Leerlaufluftkissen ausgerüstet. Diese sind - da sie lediglich das Eigengewicht des Luftkissenfahrzeugs zu tragen brauchen - wesentlich kleiner dimensioniert, als die beim Transport der schweren Bundgewichte beaufschlagten, im folgenden Lastluftkissen genannten Luftkissen, so daß nach dem Ablegen eines Bundes das Luftkissenfahrzeug sehr viel schneller wieder fahrbereit ist, denn es brauchen lediglich die kleinvolumigen Leerlaufluftkissen aufgeblasen zu werden. Allerdings ist die Hubhöhe der Leerlaufluftkissen so gewählt, daß zwischen dem auf einer Ablage liegenden Bund und der Oberkante der Bundtragsättel des Luftkissenfahrzeugs noch ein genügend großer Zwischenraum frei bleibt.

Vorteilhaft lassen sich die Tragsättel des Luftkissenfahrzeugs auf einem Drehteller anordnen, der 360°-Drehungen und damit ein gezieltes Ausrichten des Bundes entsprechend der Abwickellage auf dem Luftkissenfahrzeug ermöglicht.

Es wird vorgeschlagen, daß das Luftkissenfahrzeug mit einer auf- und abrollbaren angetriebenen Schlauchtrommel ausgerüstet ist. Der zur Energieversorgung an das Luftkissenfahrzeug angeschlossene Pneumatikschlauch mit eingelagertem Elektrokabel kann somit in fester Position verschleiß- und reibungsfrei auf das Fundament abgelegt werden, während er hingegen bei dem bekannten Luftkissenfahrzeug in ganzer Länge über das Fundament bzw. den Hüttenflur nachgezogen werden muß. Der Pneumatikschlauch kann hierbei aufgrund der Reibung aufreißen und dabei auch Schäden an dem eingelagerten Elektrokabel bewirken, was eine erhebliche Störungsquelle und Brandgefahr bedeutet.

Die Erfindung wird nachfolgend anhand eines in der Zeichnung dargestellten Ausführungsbeispiels des näheren erläutert. Es zeigen:
- Figuren 1a, 1b: Lagepläne des Ein- bzw. Auslaufteils einer Bandbehandlungsanlage mit mechanisch geführten Luftkissenfahrzeugen für den Bundtransport;
- Figur 2: einen Schnitt entlang der Linie II-II von Figur 1a bzw. Figur 1b durch im Hüttenflur verankerte, U-förmige Führungsschienen für die Luftkissenfahrzeuge;
- Figur 3: ein erfindungsgemäßes Luftkissenfahrzeug in der Draufsicht;
- Figur 4: das Luftkissenfahrzeug gemäß Figur 3 entlang der Linie IV-IV geschnitten;
- Figur 5: das Luftkissenfahrzeug gemäß Figur 3 entlang der Linie V-V geschnitten
- Figur 6: eine auskragende und mit Zinken am vorderen Ende ausgebildete Bundauflage mit ihr zugeordnetem, abgabebereitem Luftkissenfahrzeug, in der Seitenansicht dargestellt; und
- Figur 7: die Bundablage mit dem Luftkissenfahrzeug gemäß Figur 6 in der Draufsicht dargestellt.

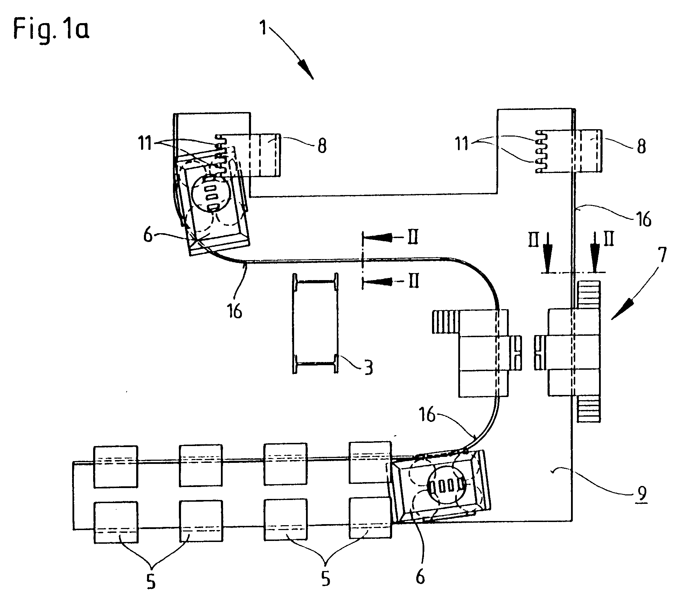

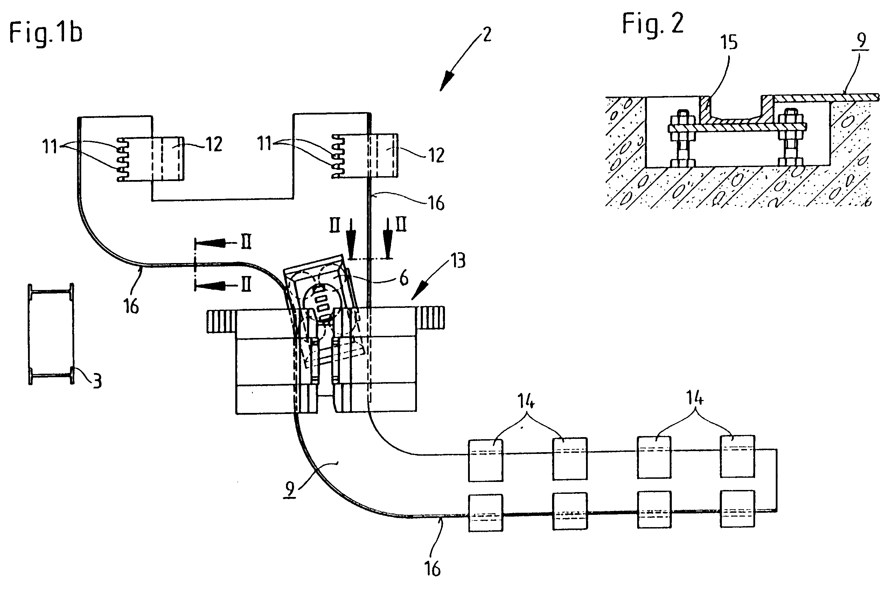

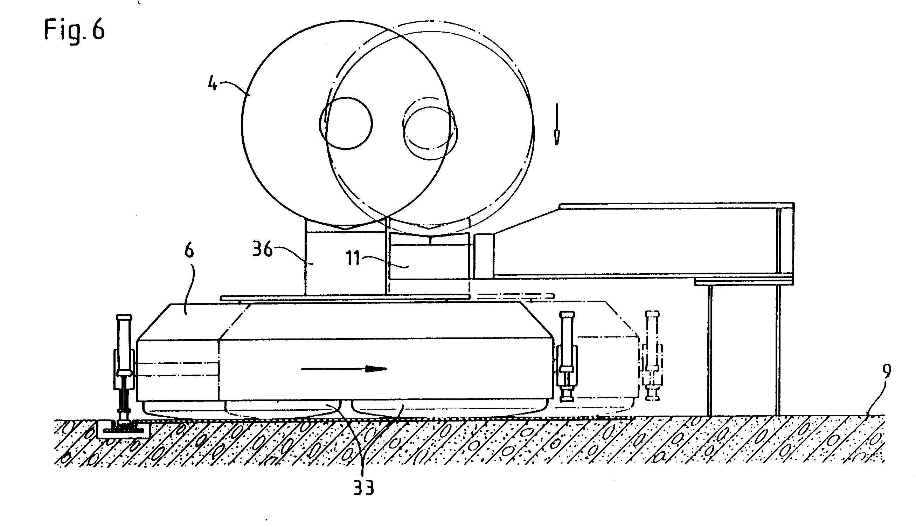

Von einer im einzelnen nicht dargestellten, zahlreiche Stationen und Behandlungsabschnitte enthaltenden Bandbehandlungsanlage sind in Figur 1a der Einlaufteil 1 und in Figur 1b der Auslaufteil 2 als Grundriß schematisch gezeigt. Ein in der Bundlagerhalle 3 der Behandlungsanlage arbeitender Hallenkran legt die ggfs. mehr als dreißig Tonnen schweren Bunde 4 (vgl. Figur 6) auf Bundablagen 5 - von denen in Figur 1a insgesamt vier vorhanden sind - ab; die Bundablagen 5 können mittig von einem Luftkissenfahrzeug 6 unterfahren werden, das einen Bund 4 von einer der Bundablagen 5 abhebt und über eine Zwischenstation 7, in der das Bund identifiziert, der Durchmesser und die Bandbreite gemessen sowie das Bindeband entfernt wird, zu Bundablagen 8 bzw. 12 transportiert, die an der Schnittstelle vom mechanisch geführten Bundtransportsystem mittels der Luftkissenfahrzeuge 6 zu einem Transport mit herkömmlichen Bundhubwagen zu bzw. von den Haspeln angeordnet sind.

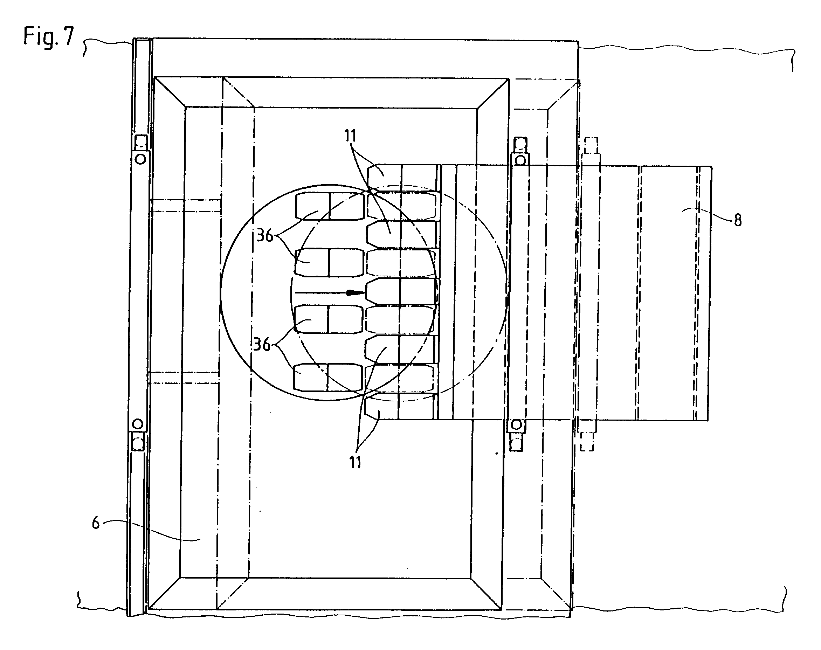

Die fest im Hüttenflur 9 verankerten Bundablagen 8 bzw. 12 sind auskragend (vgl. Figur 6) und mit Zinken 11 am vorderen Ende gabelartig ausgebildet (vgl. Figur 7). Der Auslaufteil 2 gemäß Figur 1b unterscheidet sich im wesentlichen nicht von dem Einlaufteil 1 gemäß Figur 1a, und er weist somit neben zwei mit zinkenartigen Auslegern versehenen Bundablagen 12, einer Zwischenstation 13 sowie Bundablagen 14 ein mechanisch geführtes Luftkissenfahrzeug 6 auf, das auch hier wieder in der Lage ist, die Bundablagen 14 mittig zu unterfahren.

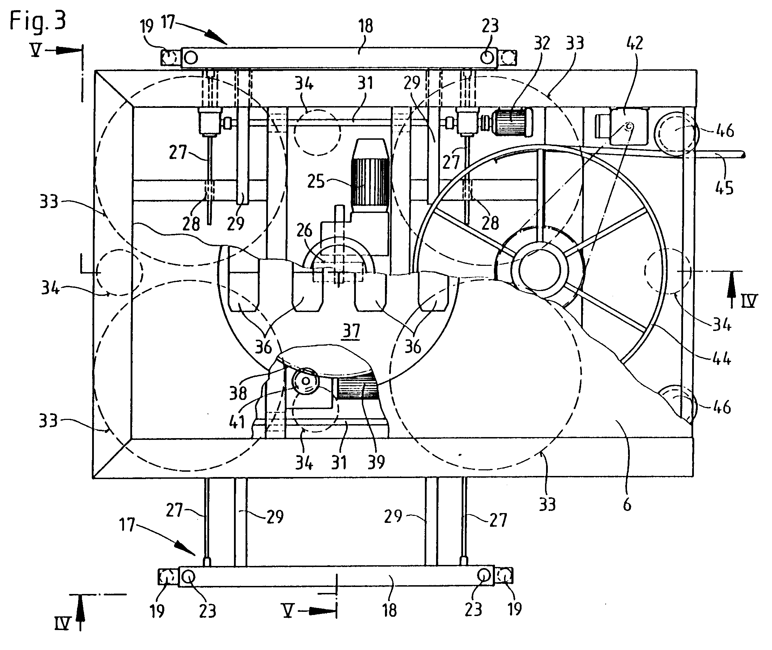

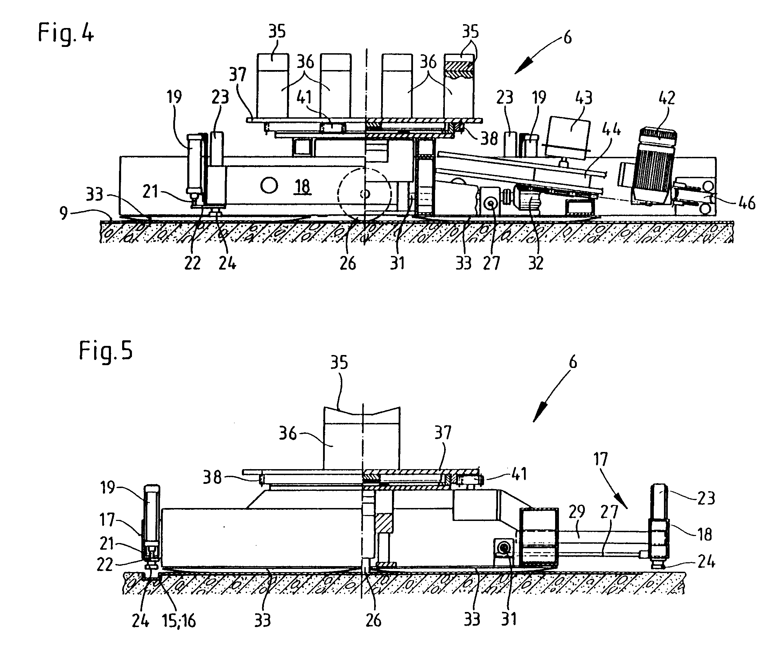

Zur mechanischen Führung der Luftkissenfahrzeuge 6, von denen sowohl im Einlauf- als auch im Auslaufteil 1, 2 jeweils eines arbeitet, sind im Hüttenflur 9 U-förmige Schienen 15 fest verankert (vgl. Figur 2) und als Leitführungen 16 für die Luftkissenfahrzeuge 6 ausgebildet. Die U-Schienen 15 bzw. Leitführungen 16 wirken mit Seitenführungen 17 zusammen, von denen an jeder Längsseite des Luftkissenfahrzeugs 6 eine angeordnet ist, wie sich aus Figur 3 ergibt. Jede Seitenführung 17 weist einen Längsbalken 18 auf, der an seinen Enden vertikal angeordnete, pneumatisch betätigte Zylinder 19 trägt, deren Kolbenstangen 21 über einen Arm 22 (vgl. Figur 4) mit vertikalen, in den Längsbalken 18 geführten Gleitstangen 23 verbunden sind. Die Gleitstangen 23 sind an ihrem bodenseitigen Ende mit Stützrollen 24 versehen, die radiale und horizontale Kräfte aufnehmen können. Mittels der Zylinder 19 kann wahlweise entweder die rechts- oder die linksseitige Seitenführung des Luftkissenfahrzeugs 6 in die ihr im Hüttenflur 9 zugeordneten U-Schienen 15 abgesenkt werden, so daß das Luftkissenfahrzeug 6 danach zwangsgeführt das gewünschte Ziel anfährt. Zum Verfahren des Luftkissenfahrzeugs 6 treibt ein Motor 25 ein Reibrad 26 an (vgl. die Figuren 3 und 4).

Zum Verfahren des Luftkissenfahrzeugs 6 quer zur Fahrtrichtung sind die Längsbalken 18 der Seitenführungen 17 mit Gewindespindeln 27 versehen, die sich in das Fahrzeuginnere erstrecken und dort in Gewindeaufnahmen 28 eingeschraubt sind (vgl. die obere Hälfte von Figur 3). Mit den Längsbalken 18 sind weiterhin sich in das Fahrzeuginnere erstreckende Führungsstangen 29 verbunden, die beim Querverfahren des Luftkissenfahrzeugs 6 für ein verkantungsfreies Verstellen sorgen. Die beiden Gewindespindeln 27 jeder Seitenführung 17 sind über eine Antriebswelle 31 mechanisch synchronisiert und von einem gemeinsamen Elektromotor 32 verstellbar. In der unteren Hälfte von Figur 3 ist die Seitenführung 17 in ausgefahrener und in der oberen Hälfte von Figur 3 in eingefahrener Position dargestellt.

An der Unterseite, d.h. dem Boden des Luftkissenfahrzeugs 6 sind vier aufblasbare Lastluftkissen 33 und vier demgegenüber wesentlich kleiner dimensionierte Leerlaufluftkissen 34 angeordnet (vgl. Figur 3). Die Lastluft- bzw. Leerlaufluftkissen 33, 34 sorgen dafür, daß sich nach dem Aufblasen - beim Transport eines Bundes werden die Lastluftkissen 33 und im Leerbetrieb des Luftkissenfahrzeugs 6 die Leerlaufluftkissen 34 aufgeblasen - unter dem Fahrzeug ein Luftfilm ausbildet, so daß die Last (Fahrzeug bzw. Fahrzeug plus Bund) praktisch reibungslos über der Hüttenflur 9 schwebt.

An seiner Oberseite weist das Luftkissenfahrzeug 6 vier im Abstand voneinander angeordnete, zur Aufnahme eines Bundes 4 mit Mulden 35 versehene Tragsättel 36 auf, die auf einem 360°-Drehkranz 37 angeordnet sind, in dessen Außenverzahnung 38 ein von einem Motor 39 angetriebenes Ritzel 41 eingreift (vgl. die Figuren 3 und 5). Zur Ausführung des Luftkissenfahrzeugs 6 in äußerster Kompakt-Bauweise trägt weiterhin eine im Fahrzeug mittels eines Elektromotors 42 und einem Schleifringaggregat 43 angetriebene Schlauchtrommel 44 bei, die den, an einen nicht dargestellten Kompressor angeschlossenen, in seinem Inneren zur Versorgung der elektrischen Aggregate ein Elektrokabel aufnehmenden Pneumatikschlauch 45 beim Verfahren auf den Boden ablegt. Damit der Pneumatikschlauch 45 einwandfrei ab- bzw. aufläuft, wird er über eine am Luftkissenfahrzeug 6 gelagerte Rolle 46 geführt.

Nachfolgend wird der Funktionsablauf im Einlaufteil 1, der zwei nicht dargestellten Abwickelhaspeln zugeordnet ist, der Bandbehandlungsanlage beschrieben; der Ablauf in dem den beiden Aufwickelhaspeln zugeordneten Auslaufteil 2 wird entsprechenden umgekehrt durchgeführt. Das im Einlaufteil 1 arbeitende Luftkissenfahrzeug 6 fährt mittig unter das nächstliegende Bund der Bundablagen 5, wobei lediglich die Leerlaufluftkissen 34 aufgeblasen sind und die der kurvenförmigen, in Figur 1a links dargestellten Leitführung 16 zugeordnete Seitenführung 17 mit ihren Stützrollen 24 in die U-Schienen 15 abgesenkt ist. Sobald sich das Luftkissenfahrzeug 6 genau unter dem Bund der Bundablage 5 befindet, werden die Lastluftkissen 33 aufgeblasen und das Luftkissenfahrzeug 6 übernimmt das Bund von der Bundablage 5, d.h. hebt es von dieser ab, so daß ein Transport zur nächsten Station, nämlich der Zwischenstation 7 möglich ist. Dort wird das Bund identifiziert. Der Durchmesser und die Bandbreite werden gemessen sowie das Bindeband entfernt. Sollte die Abwickellage des Bandanfangs des Bundes dies erfordern, kann das in den Mulden 35 auf den Tragsätteln 36 ruhende Bund mittels des Drehkranzes 37 in die gewünschte Lage gedreht werden.

Nach der Identifikation wird entschieden, ob das Bund dem ersten oder zweiten aufnahmebereiten Abwickelhaspel zugeführt werden kann. Falsche oder nicht ordnungsgemäße Bunde werden zurück in die Bundlagerhalle transportiert. Erhält das Luftkissenfahrzeug 6 von der übergeordneten Steuerung das Signal zum Transport des Bundes in die in Figur 1a linke Bundablage 8, so bleiben auch im Anschluß an die Zwischenstation 7 die der kurvenförmigen Leitführung 16 zugeordneten Stützrollen 24 der Seitenführung 17 des Luftkissenfahrzeugs 6 im Eingriff mit den in der Hüttenflur 9 verankerten U-Schienen 15 (vgl. Figur 2). Soll das Bund hingegen aus der Zwischenstation 7 in die in Figur 1a rechte Bundablage 8 transportiert werden, werden die der kurvenförmigen Seitenführung zugeordneten Stützrollen 24 angehoben und die Stützrollen 24 der gegenüberliegenden Seitenführung 17 in die U-Schienen 15 der in Figur 1a geradeaus verlaufenden Leitführung 16 abgesenkt.

Wie in Figur 1a dargestellt, transportiert das Luftkissenfahrzeug 6 das Bund zu der in Figur 1a linken Bundablage 8. Das Luftkissenfahrzeug 6 wird dort so positioniert, daß die Freiräume zwischen den Tragsätteln 36 genau vor den Zinken 11 der auskragenden, nach vorne hin offenen Bundablage 8 gelangen (vgl. Figur 7). In dieser Position wird der den Gewindespindeln 27 der in die U-Schienen abgesenkten Seitenführung 17 zugeordnete Elektromotor 32 beaufschlagt, so daß sich die Gewindespindeln 27 aus dem Fahrzeuginneren herausschrauben und das Luftkissenfahrzeug 6 dabei - geführt von den Führungsstangen 29 - quer zur normalen Fahrtrichtung, d.h. in Figur 1a nach rechts in die Bundablage 8 fährt. Während des Querverfahrens ist der Reibradantrieb angehoben und die Stützrollen 24 stützen sich in den fest verankerten U-Schienen 15 ab. Sobald das Luftkissenfahrzeug 6 seine in die Bundablage 8 eingefahrene Endposition erreicht hat (vgl. das in Figur 6 strichpunktierte Fahrzeug), werden die Lastluftkissen 33 abgeschaltet und damit das Luftkissenfahrzeug 6 abgesenkt, wobei das Bund 4 auf den Zinken 11 der Bundablage 8 abgelegt wird (vgl. in Figur 6 das abgesenkte, strichpunktiert dargestellte Bund). Die durch das Absenken geleerten Lastluftkissen 33 werden nicht mehr aufgeblasen, stattdessen die Leerlaufluftkissen 34 eingeschaltet, die dann nur noch das Eigengewicht des Luftkissenfahrzeugs 6 tragen. Die Hubhöhe der Leerlaufluftkissen 34 ist dabei so, daß zwischen dem auf den Zinken 11 der Bundablage 8 liegenden Bund 4 und der Oberkante der Tragsättel 36 des Luftkissenfahrzeugs 6 noch ein genügend großer Zwischenraum freibleibt. Durch Umkehr der Drehrichtung der Gewindespindeln 27 wird das Luftkissenfahrzeug 6 sodann quer aus der Bundablage 8 herausgefahren. Das somit in Fahrtposition wieder frei vor der Bundablage stehende Luftkissenfahrzeug 6 wird zum Antransport eines weiteren Bundes wieder in die Bundlagerhalle 3 mit den Bundablagen 5 zurückgefahren. Hier taktet es schon während der Bundlaufzeit des Abwickelhaspels die Bunde so, daß die vorderste, in Figur 1a rechte Bundablage 5 mit einem abnahmebereiten Bund belegt ist und die in Figur 1a linke Bundablage 5 zur Belegung mit einem neuen Bund durch den Hallenkran frei ist.

### Liste der Bezugszeichen

- 1: Einlaufteil
- 2: Auslaufteil
- 3: Bundlagerhalle mit Hallenkran
- 4: Bund
- 5: Bundablage
- 6: Luftkissenfahrzeug
- 7: Zwischenstation
- 8: Bundablage
- 9: Hüttenflur
- 11: Zinken
- 12: Bundablage
- 13: Zwischenstation
- 14: Bundablage
- 15: U-Schiene
- 16: Leitführung
- 17: Seitenführung
- 18: Längsbalken
- 19: Zylinder
- 21: Kolbenstange
- 22: Arm
- 23: Gleitstange
- 24: Stützrolle
- 25: Motor
- 26: Reibrad
- 27: Gewindespindeln
- 28: Spindelaufnahme
- 29: Führungsstange
- 31: Antriebswelle
- 32: Elektromotor
- 33: Lastluftkissen
- 34: Leerlaufluftkissen
- 35: Mulde
- 36: Tragsattel
- 37: Drehteller
- 38: Außenverzahnung
- 39: Motor
- 41: Ritzel
- 42: Elektromotor
- 43: Schleifringapparat
- 44: Schlauchtrommel
- 45: Pneumatikschlauch
- 46: Kabelrolle

## Patentansprüche

1. Bundtransportsystem mit Luftkissenfahrzeugen für Geradeaus- und Kurvenfahrt, wobei das Luftkissenfahrzeug (6) an seinen Längsseiten mechanische, wechselweise rechts- oder linksseitig betätigbare Seitenführungen (17) aufweist, denen Leitführungen (16) zugeordnet sind,
**dadurch gekennzeichnet**,
daß jede Seitenführung (17) an den Enden eines Längsbalkens (18) vertikal heb- und senkbare Stützrollen (24) aufweist und zum Querverfahren des Luftkissenfahrzeuges (6) die Seitenführungen (17) horizontal ein- und ausfahrbar sind.

2. Bundtransportsystem nach Anspruch 1,
**dadurch gekennzeichnet,**
daß sich mit den Längsbalken (18) der Seitenführungen (17) verbundene Führungsstangen (29) und Gewindespindeln (27) in das Fahrzeuginnere erstrecken und die Gewindespindeln (27) in Gewindeaufnahmen (28) angeordnet sind.

3. Bundtransportsystem nach Anspruch 2,
**dadurch gekennzeichnet,**
daß die Gewindespindeln (27) jeder Seitenführung (17) über eine gemeinsame Antriebswelle (31) an einen Antriebsmotor (32) angeschlossen sind.

4. Bundtransportsystem nach einem der Ansprüche 1 bis 3,
**dadurch gekennzeichnet,**
daß die Stützrollen (24) an in den Längsbalken (18) geführten, über einen Arm (22) mit den Zylindern (19) verbundenen Gleitstangen (23) angeordnet sind.

5. Bundtransportsystem nach einem der Ansprüche 1 bis 4,
**dadurch gekennzeichnet,**
daß das Luftkissenfahrzeug (6) mit Leerlaufluftkissen (34) ausgerüstet ist.

6. Bundtransportsystem nach einem der Ansprüche 1 bis 5,
**dadurch gekennzeichnet,**
daß die Tragsättel (36) des Luftkissenfahrzeugs (6) auf einem Drehteller (37) angeordnet sind.

7. Bundtransportsystem nach einem der Ansprüche 1 bis 6,
**dadurch gekennzeichnet,**
daß das Luftkissenfahrzeug (6) mit einer angetriebenen Schlauchtrommel (44) ausgerüstet ist.

## Claims

1. Band transport system with air cushion vehicles for straight travel out and curved travel, wherein the air cushion vehicle (6) has at its longitudinal sides mechanical lateral guides (17) which are actuable alternately at the righthand side and the lefthand side and are associated with directing guides (16), characterised thereby that each lateral guide (17) has vertically raisable and lowerable support rollers (24) at the ends of a longitudinal beam (18) and the lateral guides (17) are horizontally movable in and out for transverse movement of the air cushion vehicle (6).

2. Band transport system according to claim 1, characterised thereby that guide rods (29), which are connected with the longitudinal beams (18) of the lateral guides (17), and threaded spindles (27) extend in the vehicle interior and the threaded spindles (27) are arranged in threaded receivers (28).

3. Band transport system according to claim 2, characterised thereby that the threaded spindles (27) of each lateral guide (17) are connected to a drive motor (32) by way of a common drive shaft (31).

4. Band transport system according to one of claims 1 to 3, characterised thereby that the support rollers (24) are arranged at slide rods (23) which are guided in the longitudinal beams (18) and connected with the cylinders (19) by way of an arm (22).

5. Band transport system according to one of claims 1 to 4, characterised thereby that the air cushion vehicle (6) is equipped with idling air cushions (38).

6. Band transport system according to one of claims 1 to 5, characterised thereby that the support saddles (36) of the air cushion vehicle (6) are arranged on a turntable (37).

7. Band transport system according to one of claims 1 to 6, characterised thereby that the air cushion vehicle (6) is equipped with a driven hose drum (44).

## Revendications

1. Système de transport de paquets avec véhicule à coussin d'air pour la circulation en ligne droite et en ligne courbe, dans lequel le véhicule à coussin d'air (6) possède sur ses côtés longitudinaux des guidages latéraux (17) mécaniques susceptibles d'être actionnés alternativement du côté droit et du côté gauche, auxquels sont associés des éléments de guidage (16),
caractérisé en ce que chaque guidage latéral (17) comporte aux extrémités d'une poutre longitudinale (18) des galets de soutien (24) susceptibles d'être soulevés et abaissés verticalement, et en ce que pour le déplacement transversal du véhicule à coussin d'air (6) les guidages latéraux (17) sont susceptibles d'être déployés et rétractés horizontalement.

2. Système de transport de paquets selon la revendication 1, caractérisé en ce que des tiges de guidage (29) reliées aux poutres longitudinales (18) des guidages latéraux (17) et des broches filetées (27) s'étendent jusque dans l'intérieur du véhicule, et en ce que les broches filetées (27) sont agencées dans des éléments de réception à pas de vis (28).

3. Système de transport de paquets selon la revendication 2, caractérisé en ce que les broches filetées (27) de chaque guidage latéral (17) sont reliées à un moteur d'entraînement (32) au moyen d'un arbre moteur commun (31).

4. Système de transport de paquets selon l'une quelconque des revendications 1 à 3, caractérisé en ce que les galets de soutien (24) sont agencés sur des tiges coulissantes (23) guidées dans les poutres longitudinales (18) et reliées aux cylindres (19) par l'intermédiaire d'un bras (22).

5. Système de transport de paquets selon l'une quelconque des revendications 1 à 4, caractérisé en ce que le véhicule à coussin d'air (6) est équipé de coussins d'air de marche à vide (34).

6. Système de transport de paquets selon l'une quelconque des revendications 1 à 5, caractérisé en ce que les socles de support (36) du véhicule à coussin d'air (6) sont agencés sur une plaque tournante (37).

7. Système de transport de paquets selon l'une quelconque des revendications 1 à 6, caractérisé en ce que le véhicule à coussin d'air (6) est équipé d'un tambour à tuyau (44) motorisé.
